# EUROPEAN PATENT SPECIFICATION

(11) **EP 2 649 873 B1**
(45) Date of publication and mention of the grant of the patent: **08.06.2016**
(21) Application number: 12164056.9
(22) Date of filing: 13.04.2012
(51) Int. Cl.: A01D 34/74

(54) **Improvements in or relating to lawn-care apparatus**
Verbesserungen an oder im Zusammenhang bei Rasenpflegegeräten
Perfectionnements des/ou associés aux appareils de traitement de gazon

(43) Date of publication of application: 16.10.2013
(73) Proprietor: ROBERT BOSCH GMBH, 70442 Stuttgart (DE)
(72) Inventor: Taylor, Jon, Attleborough, Norfolk NR17 2BT (GB); Armstrong, Gavin, Ben, Elsmwell, Suffolk IP30 9GH (GB)

(56) References cited:
- GB-A- 2 352 956
- US-A- 2 728 582
- US-A- 2 818 270
- US-A- 4 942 726

## Description

The present invention relates to improvements in, or relating to, lawn-care apparatus. In particular, it relates to apparatus for converting the working (cutting) height adjustment system of a lawn-care machine, also known as 'height-of-cut' or HOC adjustment systems.

Typically, a lawnmower has four wheels, or two front wheels and a rear roller. In order to change the height-of-cut of a lawn-care apparatus such as a lawnmower or scarifier, two solutions are typically implemented.

The system known in the art as an 'E-gate' system allows each wheel of the lawnmower to be moved independently, and set to a pre-determined height via sprung axles in a multi-channel aperture known as an 'E-gate' slot that typically has three pre-determined positions. More slots may be provided to allow a greater range of height variation, and with adaptation it may relate to any system with two predetermined positions (a 'C-gate') upwards. However, whilst cheap to implement, this system requires the user to adjust each wheel individually to achieve the selected height-of-cut. Furthermore, incorrect adjustment of the wheels may lead to an unstable or uneven lawnmower chassis, and therefore uneven grass cutting.

Alternatively, a 'single point' operation provides cranked axles linked together via a sprung link arm coupled with a detent arrangement allowing the movement and locking of all four lawnmower wheels into the pre-determined positions, and therefore pre-determined heights of cut. The user only has to operate a single lever, or other actuator, to move and lock all wheels to the desired cut height. This method can also be arranged to move the front and rear axles independently.

However, each of these two systems requires a different chassis or deck moulding, and producing chassis or deck mouldings is expensive. The present invention seeks to overcome this problem by providing an adaptor for a lawnmower construction to allow the same chassis or deck to be used to provide both an 'E-gate' type height-of-cut adjustment and a single point adjustment.

GB2352956 discloses a lawnmower comprising a chassis having a pair of rear wheels and a smaller diameter rear roller disposed between the rear wheels. The chassis and a rear axle joining the rear wheels are moveable relative to one another to adjust the height-of-cut.

US2728582 discloses a lawn mower assembly including a base and a skirt depending therefrom, a pair of axles, means to secure said axles to said base, rows of substantially vertically disposed notches in said skirt to receive the wheel bearing ends of said axles, and releasable toggle means to shift said wheel bearing ends from one notch to another and maintain them in the desired notches. The said notches are defined by cutaway portions in said skirt leaving a series of hills and valleys and large enough to permit a wheel bearing axle end to move freely over a hill in passing from one valley to another, whereby in moving from one valley to another a wheel bearing axle end remains within its respective cutaway portion.

US4942726 discloses a mechanism and a method for converting a fixed wheeled walk-behind mower into a caster wheel walk-behind mower and vice versa, comprising two caster wheel assemblies having wheels mounted in brackets journalled for rotation in frames.

According to the invention there is provided, in its broadest sense, a lawn-care apparatus comprising a chassis and an adaptor, the adaptor engagable with an aperture in the chassis, the aperture suitable for providing multiple fixed axle positions corresponding to multiple cutting heights. The adaptor also provides a single fixed channel adapted to receive a cranked axle and within which said cranked axle can be rotated to provide multiple cutting heights.

Preferably, the lawn-care apparatus is a lawnmower.

Preferably, the aperture is a multi-channel aperture, such as an 'E-gate' aperture to allow adaption of the common fixed axle chassis type.

Preferably, the channel provided to engage with the cranked axle is an aperture extending through the width of the adaptor to allow the cranked axle to extend all of the way through, and provide a central single axle for two wheels.

Preferably, the channel which engages the cranked axle is aligned away from the fixed multiple axle positions of the aperture, thereby avoiding collision between an adjacent wheel and other components providing an un-hindered height-of-cut adjustment system.

Preferably, the adaptor has a push-fit engagement with the apparatus so that it may be easily installed.

Preferably, the adaptor comprises at least one protrusion extending away from the main body of the adaptor to engage with the aperture allowing the adaptor to better engage with the aperture. Preferably still, the adaptor comprises at least two protrusions, and at least one extends further than the remaining protrusion to engage the aperture sooner than the remaining protrusion when inserting the adaptor, providing a more efficient insertion. Preferably still, at least one of the protrusions comprises clip features that retain the adaptor with the apparatus once fully engaged with the aperture. Preferably still, the clip features provide a one-way fit, and the adaptor cannot be dis-engaged from the aperture once fully engaged therefore providing a secure holding for the adaptor.

Preferably, the channel is not fully enclosed by the adaptor therefore allowing a cranked axle to be slotted into the channel for easy installation of the cranked axle and adaptor. Preferably still, the cranked axle is retained in place by the edge of the 'E-gate' aperture and the channel within the adaptor, therefore providing a single channel for the cranked axle to rotate in, whilst maintaining a edge slot to insert the axle into.

Preferably, the adaptor further comprises a ridge section as a running rail for the cranked axle and therefore assist rotation of the cranked axel in the adaptor, minimising friction.

Preferably, the adaptor further comprising detents positioned around the channel. A separate lever device designed to engage with a cranked axle and enable rotation of the cranked axle, the lever device mating with the detents of the adaptor thus retaining the rotational position of the cranked axle as desired.

According to a further embodiment of the invention there is provided, an adaptor engageable with an aperture in a chassis of a lawn-care apparatus, the aperture suitable for providing multiple fixed axle positions corresponding to multiple cutting heights. The adaptor also provides a single fixed channel adapted to receive a cranked axle, and within which said cranked axle can be rotated to provide multiple cutting heights.

The above and other aspects of the present invention will now be described in further detail, by way of example only, with reference to the accompanying drawings, in which:
Figure 1 is a front left-side exploded perspective view of an embodiment of a lawn-care apparatus in accordance with the present invention, in the form of a lawnmower configured for the 'E-gate' height-of-cut adjustment system;
Figure 2 is a front left-side exploded perspective view of an embodiment of a lawn-care apparatus in accordance with the present invention, in the form of a lawnmower comprising converters allowing a 'Single Point' height-of-cut adjustment system to be attached to a lawnmower chassis configured for an 'E-gate' height-of-cut adjustment system;
Figure 3 is a perspective view of a first end of one embodiment of the push-fit inserts to be fitted to the 'E-gate' apertures;
Figure 4 is a perspective view of the opposite end of one embodiment of the push-fit inserts of Figure 3;
Figure 5 is a cross-sectional view of one embodiment of the push-fit inserts of Figure 3 including a retention clip designed to retain the inserts in the 'E-gate' aperture;
Figure 6 is a close-up cross-sectional view of the retention clip of Figure 5;
Figure 7 is a side-on close-up view of one of the bare 'E-gate' chassis moulding apertures with one end of the cranked-axle protruding from the chassis moulding, with the cranked-axle shown in a first position;
Figure 8 is a side-on close-up view of one of the converted 'E-gate' chassis moulding apertures with a push-fit insert fitted, with one end of the cranked-axle protruding from the insert, and with the cranked-axle shown in the first position of Figure 7;
Figure 9 is a side-on close-up view of the converted 'E-gate' chassis of Figure 8 with the cranked-axle in a second position;
Figure 10 is a side-on close-up view of the converted 'E-gate' chassis of Figure 8 with the cranked-axle shown in a third position; and
Figure 11 is a perspective view of a second embodiment of the push-fit insert comprising two parts, a first push-fit adaptor comprising detent features to aid retention of the cranked-axle in a pre-determined position, the second part comprising a height-of-cut adjustment lever adapted to engage with the detents of the first part, and a main body to engage with the cranked-axle to adjust the height-of-cut, and apertures to engage with the linking arm between the front and rear cranked-axles.

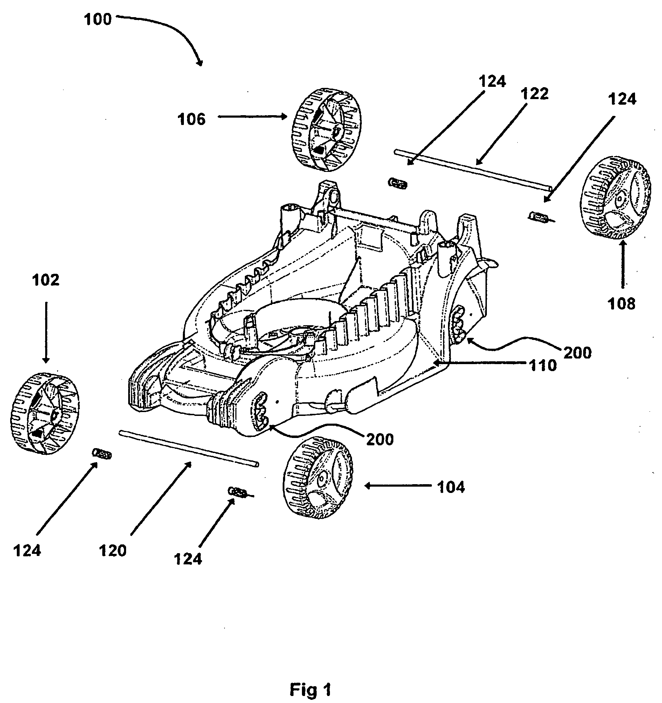

Figure 1 shows a lawnmower (100) having a lawnmower chassis (110) equipped with a standard 'E-gate' aperture height-of-cut system. The lawnmower (100) includes a front-right wheel (102), front-left wheel (104), rear-right wheel (106) and rear-left wheel (108). The chassis (110) has four multi-channel apertures (200) positioned at the front-right, front-left, rear-right and rear-left of the chassis to engage with, and secure in position, one of a front axle (120) and rear axle (122) that each extends across the width of the chassis (110).

A multi-channel aperture provides multiple fixed positions to accommodate an axle (120, 122), and channels linking the fixed positions together wide enough to accommodate the width of the axle (120, 122), thus allowing the axle (120,122) to be relocated between each of the fixed positions as desired.

In the present example, the four multi-channel apertures (200) each have three fixed positions in which to accommodate an axle (120, 122), and a channel linking the positions together, thus giving the aperture the appearance of the letter 'E ', hence the use in the art of the term 'E-gate'. The multi-channel apertures (200) shall be referred to as 'E-gate' apertures herein.

The front (102, 104) and back (106, 108) wheel pairs are joined together across the width of the lawnmower chassis (110) via the front (120) and rear axle (122) respectively. The axles (120, 122) are attached to retaining springs (124) applying a tension to the axles (120, 122), pulling them towards the rear of the chassis (110). This tension from the springs (124) holds the end of each axle (120, 122) in one of the fixed positions within its respective 'E-gate' aperture.

The height-of-cut of the lawnmower (100) is adjusted by pulling each wheel (102, 104, 106, 108), and its respective axle end, forward and away from the fixed position on the 'E-gate' aperture, against the force of the retaining springs (124). The wheel and axle end may then be manoeuvred up or down the 'E-gate' aperture channel to select the desired height-of-cut, and released back, under tension from the retaining spring (124) into the corresponding fixed position within the 'E-gate' aperture.

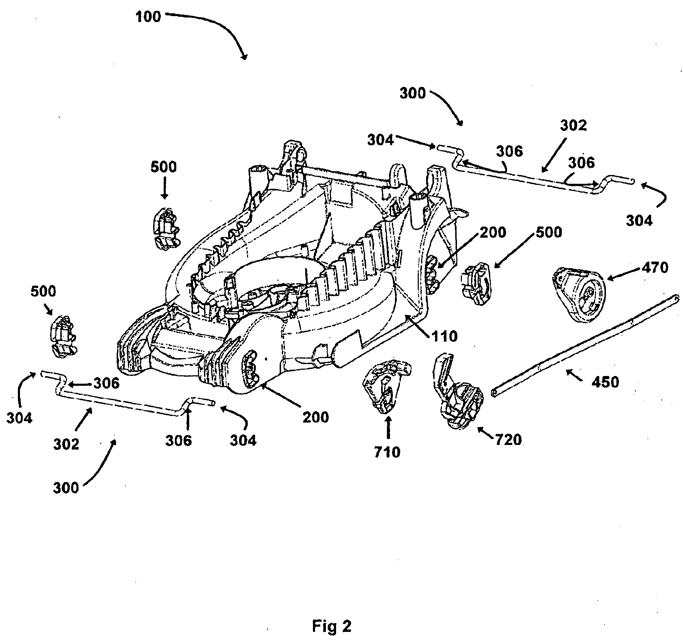

Figure 2 shows the same lawnmower chassis (110) equipped with four 'E-gate' apertures (200). However, in this configuration the lawnmower (100) is also equipped with four corresponding 'E-gate' aperture adaptors (500, 710) allowing a cranked-axle height-of-cut system to be employed in the original 'E-gate' equipped chassis (110).

A cranked axle (300) is an axle comprising an inner section (302) and an outer section (304) at each end of the cranked axle (300). The outer sections (304) of the cranked axis are parallel to, but not aligned with, the inner section (302) of the cranked axle (300). Both outer sections (304) of the cranked axle (300) are aligned and parallel with each other. The inner section (302) is connected to each of the outer sections via an angled crank arm section (306). Whilst the crank arm (306) is typically at right angles to both the parallel inner section (302) and outer section (304) of the cranked axle (300), it may be at any angle which is not parallel to the inner section (302) and outer section (304).

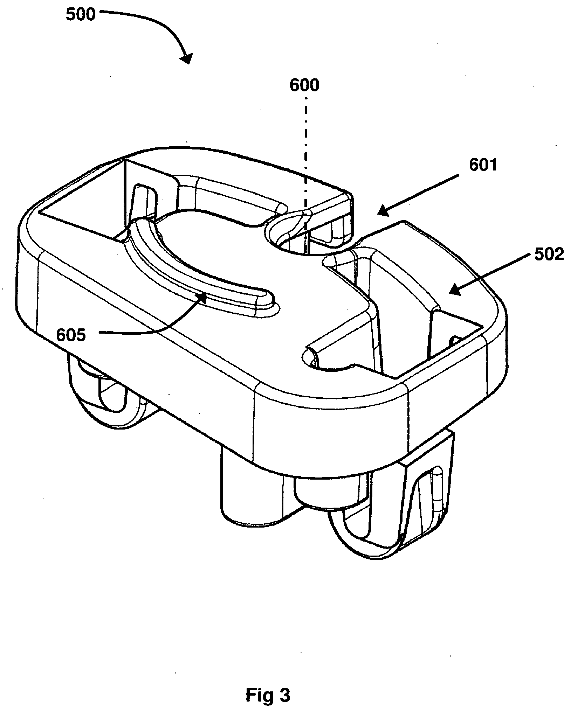

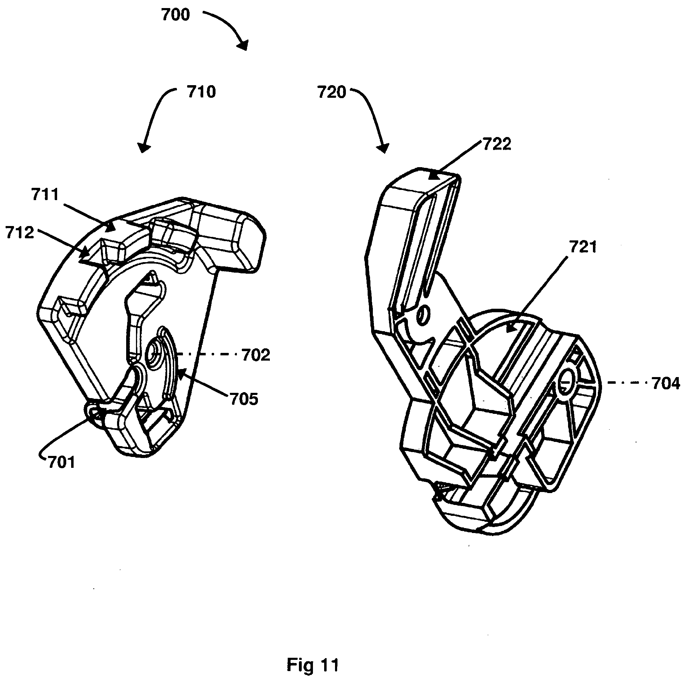

The 'E-gate' adaptors described by the present invention are shown in a first configuration in Figures 3 to 6, and in a second configuration in Figure 11.

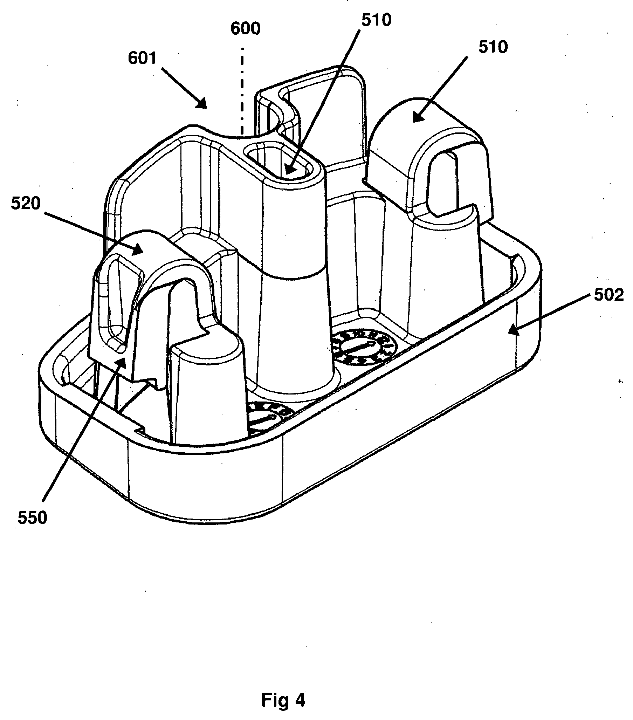

As shown in the first configuration in Figures 3 and 4, the adaptors (500) are shaped to engage with the 'E-gate' aperture (200) of the chassis (110), i.e. the 'E' shaped hole (200) in the chassis (110) where previously a standard axle (120) would have been used.

The 'E-gate' adaptor (500) comprises a main body (502) which, when properly engaged, sits over the 'E-gate' aperture (200) and abuts against the outside of the chassis (110) around its edge. The main body (502) covers the 'E-gate' aperture (200), and is provided with a channel (600) that extends all of the way through the adaptor (500) allowing the inner section (302) of a cranked axle to be held in place inside the channel (600), and rotate freely. The outer section (304) of the cranked axle (300) will therefore describe an arc centred around the central axis of rotation of the inner section (302) of the cranked axle (300) as the inner section (302) is rotated within the channel (600) of the adaptor (500).

In the present example, the channel (600) is located on the edge of the main body (502) so that a portion (601) at least as wide as the cranked-axle (300) is left un-enclosed by the main body (502). The cranked-axle (300) may therefore be inserted into the channel (600) from through the gap (601) in the main body (502), from the side. When fully engaged with the 'E-gate' aperture (200), the cranked-axle (300) is held in place by the sides of the channel (600) in the adaptor (500) and the edge of the 'E-gate' aperture (200).

A small raised ridge section (605) protrudes from the main body (502) to provide a rail, or runner, for the cranked arm (306) to ride along during adjustment of the cranked axle (300). The ridge describes a suitably arced line about the axis of rotation of the cranked axle (300).

Extending outwardly from the main body (502) of the adaptor (500), are three protruding arms (510, 520, 530) that are designed to engage with the three 'arm holes' of the E-shaped 'E-gate' aperture (200) in the chassis (110).

The outer two protruding arms (510, 520) are retaining arms, and are equipped with clip sections (550) which will hold the adaptor (500) in place within the 'E-gate' aperture (200) once fitted properly. The middle arm (530) is an alignment arm.

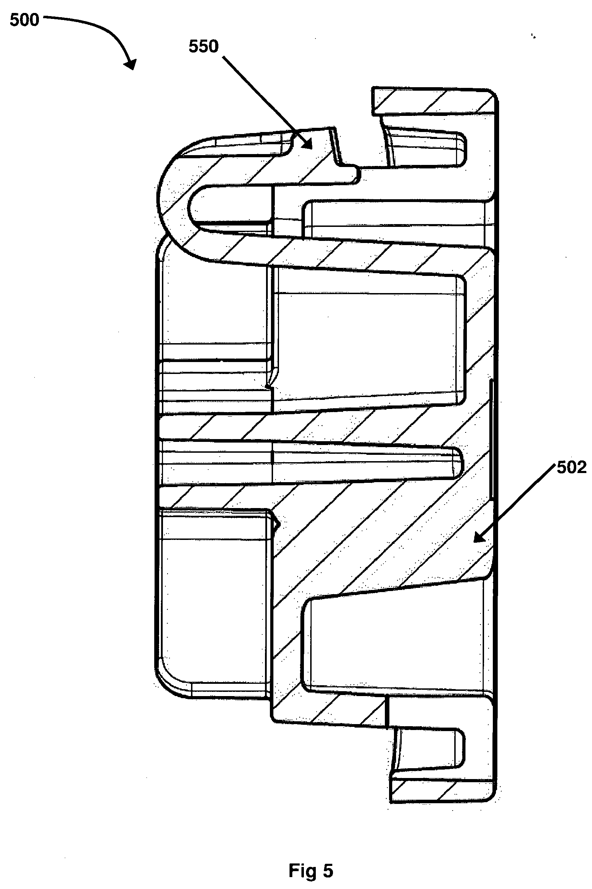

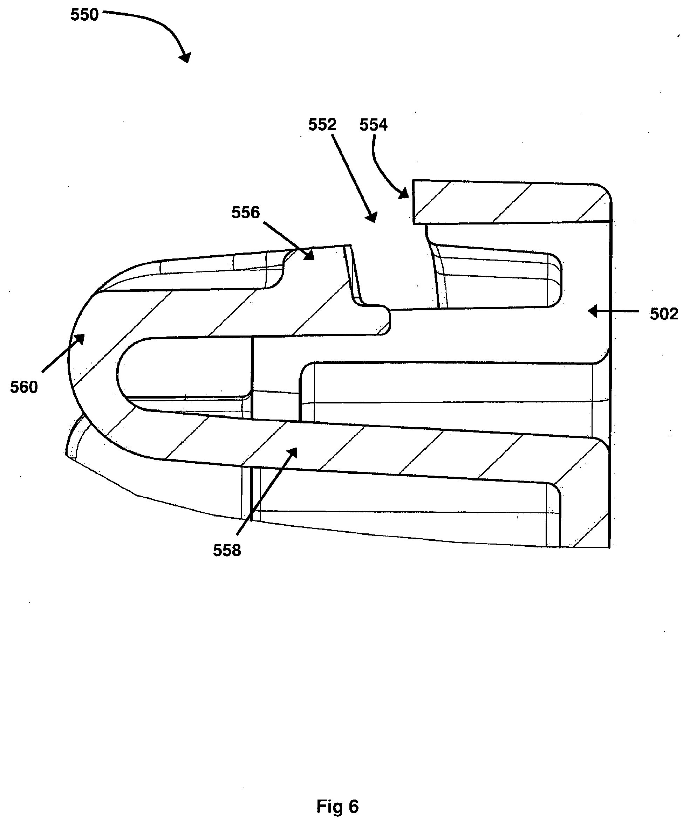

Figures 5 and 6 provide greater detail of the clip sections (550).

The retaining arms (510, 520) each comprise a first section (558) attached to, and protruding away from, the main body (502) of the adaptor (500). At the end of the first section (558), the retaining arm (510, 520) doubles back on itself outwardly, creating a rounded distal end (560) to the retaining arm. The retaining arm continues back from the distal end (560) towards the main body (502) in a second section forming a sprung wing (556) which is angled at an acute angle from the first section (558) and with respect to the axis of insertion into the 'E-gate' aperture (200). This sprung wing (556) is only attached at the rounded distal end (560), and comes to an end before reaching the main body (502), leaving a gap (552) large enough to accommodate the width of the chassis (110) surrounding the edge of the 'E-gate' aperture (200).

As the adaptor (500) is pushed into, and engages with, the 'E-gate' aperture (200), the outer surface of the sprung wing (556) is pushed inwards by the edge of the 'E-gate' aperture (200). The retaining arm (510, 520) is deformed about the rounded end (560) as the sprung wing (556) is pushed inwards. Once the adaptor (500) has been inserted far enough so that the edge of the chassis (110) surrounding the 'E-gate' aperture has passed the end of the sprung wing (556), and when the outside surface of the chassis (110) meets the abutment surface (554) of the main body (502), the sprung wing (556) snaps back into its original, un-deformed shape. The chassis edge of the 'E-gate' aperture (200) sits inside a gap (552) between the end of the sprung wing (556) and the abutment surface (554) of the main body (502). Thus, the adaptor (500) is held in place in the 'E-gate' aperture (200) on either side by the abutment surface (554) of the main body (502), and the end of the sprung wing (556) of the retaining arm (510, 520).

The remaining protruding arm (530) is an alignment arm and extends further out from the main body (502) of the adaptor (500) than the rounded ends (560) of the two retaining arms (510, 520). Engagement with the 'E-gate' aperture (200) is aided by aligning the adaptor (500) with the aperture (200) before the retaining arms (510, 520) secure the adaptor (500) into position. This means the adaptor (500) can be quickly and easily installed onto the chassis (110) without having to worry about aligning up all three arms before insertion.

Figure 11 shows a second configuration (700) of the 'E-gate' adaptor comprising two separate parts (710, 720). The first part (710) is engageable with an 'E-gate' aperture (200) in a similar way as the first configuration adaptor (500) described previously and shown in Figures 3 and 4. That is to say, the rear of the adaptor (700) comprises protrusions which engage with the 'E-gate' aperture (200) of the lawnmower chassis (110). The first part (710) may also comprise similar clip features to maintain the engagement of the adaptor (710) with the chassis (110).

The adaptor (710) also comprises the necessary channel (702) and opening (701) to accommodate the cranked axle (300). However, in addition to the features found in the first configuration of adaptors (500) shown in Figures 3 and 4, the second configuration also comprises a raised crest section (711) comprising several spaced-apart detents (712) cut into it. These detents (712) correspond to fixed height-of-cut positions for the height-of-cut system. The detents (712) are for engagement with the second part (720) of the second configuration adaptor (700) and ensure that the cranked axle (300) is held in position once the desired height-of-cut has been chosen.

The second part (720) of the alternative configuration (700) of the adaptor comprises a handle section (722) attached to a main body (721). The handle section (722) of the second part (720) of the alternative configuration (700) is shaped so as to engage the detents (712) of the first section (710). The handle is rotatable around the rotational axis of the inner section (302) of the cranked axle (300), and the main body (721) of the second part (720) comprises a channel (not visible) to engage with the cranked arm (306) of the cranked axle (300), and adjacent and perpendicular to a through-hole (704) which engages with an outer section (304) of the cranked axle (300), the through-hole (704) suitably displaced from the rotational axis of the inner cranked axle (302). Therefore the second part (720) engages with the cranked-arm (306) and outer section (304) of the cranked axle (300) to provide a means of rotating the cranked axle (300) about the inner section (302).

In order to adjust the height-of-cut system, the lever (722) is pulled away and out from the detents (712) of the first section (710). The second section (720) is thus free to move about the rotational axis of the cranked axle (300), i.e. the inner section (302).

As the lever (722) and main body (721) are rotated, the cranked axle (300) is rotated since the outer section (304) and cranked arm (306) are engaged with the rotationally-offset through-hole (704) and perpendicular channel (not visible) respectively. Once the cranked axle (300) has been rotated into the preferred position, the lever (722) may be placed into the nearest corresponding detent (712). The cranked axle (300) is thus held in position until the height-of-cut is adjusted again. Any number of detent positions can be accommodated by the first section (710) if desired, in order to provide multiple height-of-cut positions.

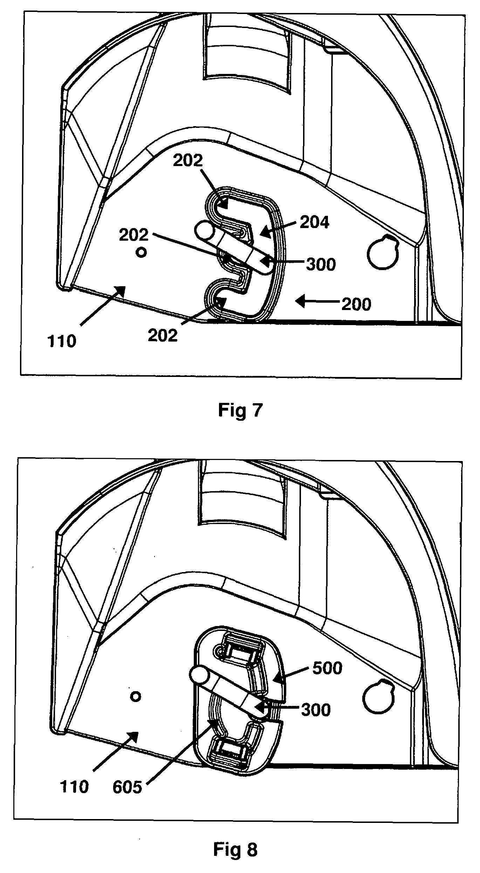

As seen in Figure 7, the 'E-gate' aperture comprises three end positions (202), representing three preset height-of-cut positions, each corresponding to where the original straight axle (120) would be accommodated during use of the lawnmower (100). The three fixed height-of-cut positions (202) for housing the axle (120) are connected by a corresponding adjustment channel (204) where the axle (120) may be moved between the different end positions (202). When the cranked-axle (300) is engaged with the 'E-gate' aperture (200), the inner section (302) is positioned within the adjustment channel (204) of the aperture (200), and not in one of the three preset end positions (202). Therefore during adjustment of the cranked-axle (300) the rotationally-offset outer sections (304) describe an arc nearer the three fixed positions (202) of the 'E-gate' aperture (200), and any attached wheels (402, 404, 406, 408) are less likely to contact additional parts of the machinery during adjustment. If the inner section (302) of the cranked-axle (300) were to be aligned with one of the end sections (202) of the 'E-gate' aperture (200), the position of the wheels, owing to the offset nature of the outer section (304) of the cranked-axle (300), would be significantly displaced from where the wheels on the straight axle (120) would sit, and therefore increase the chances of being interfered with by additional components of the lawnmower (100) during adjustment.

In Figures 8 to 10, the adaptor (500) has been fitted over the top of and into the 'E-gate' aperture (200). In Figure 8 the cranked axle inner section (302) is held in its position and the outer section (304) is in a first position.

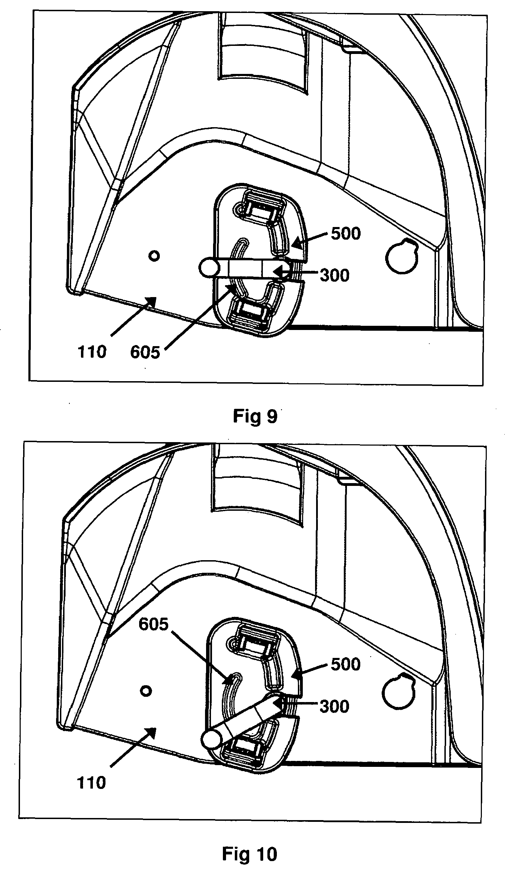

Figures 9 and 10 show the cranked axle outer sections (304) in a second and third position respectively. The outer sections (304) of the cranked axle (300) describe an arc around the rotational axis of the inner section (302) of the cranked axle (300). Therefore, by rotating the cranked axle (300), the height-of-cut of the lawnmower (100) can be adjusted. With the wheels and cranked axle (300) in the first position as shown in Figure 8, the wheels are held in a high position with respect to lawnmower chassis (110), and therefore the lawnmower chassis (110) is closer to the ground during operation. This results in a lower height-of-cut for the lawnmower (100) and therefore shorter grass.

With the cranked axle (300) held in a second or third position as shown in Figures 9 and 10 respectively, the wheels are held in a lower position with respect to the chassis (110) of the lawnmower (100). Therefore the chassis (110) is held further off the ground than in the first position as shown in Figure 8. This leads to a greater height-of-cut and longer grass after cutting.

As shown in Figure 2, when fully constructed, each of the existing 'E-gate' apertures (200) are fitted with one of four adaptors (500, 710)and corresponding handle section (720). Front and rear cranked axles (300) are accommodated and held in place by the adaptors (500, 710). The inner sections (302) of the cranked-axles (300) are held in place by the open-sided channels (600) of the adaptors (500, 710) and the edge of the 'E-gate' aperture (200). When the inner section (302) of the cranked axle (300) rotates within the channel (600) of the adaptor, the outer section (304) describes an arc centred around the rotational axle of the inner section (302). It is this arc which allows the height-of-cut to be adjusted.

The front and rear cranked axles (300) are linked together via a linking arm (450) on one side of the device (100). The linking arm (450) attaches to, and is engaged with, the lever section (720) of the alternative configuration of the adaptor (700). The linking arm (450) is also engaged with a corresponding attachment (470) on the remaining cranked-axle (300).

The device is further supplied with a spring (not shown) to provide a bias force in order to make adjusting height-of-cut of the lawnmower (100) easier. The lawnmower is thus sprung so that lowering the lawnmower chassis (110) with gravity requires work to be done to extend the spring (not shown). Therefore the stored tension within the spring (not shown) when the lawnmower chassis (110) is at its lowest height-of-cut position, may be released and used to assist raising the lawnmower chassis (110) against gravity, to a higher height-of-cut position. This also ensures that when lowering the lawnmower chassis (110) to a lower height-of-cut position, the weight of the lawnmower (100) does not allow the chassis (110) to simply to fall under gravity, or force cranked axle (300) into the lower position with speed fast enough to cause damage to the device or injury to the end user.

It is therefore possible to adjust the height-of-cut setting for each of the four wheels of the device simultaneously by operating only one lever (720). Furthermore, each of the wheels are moved in synchronization with the others, therefore ensuring an even and level height-of-cut Since the cranked axle (300) extends through the entire width of the lawnmower chassis (110), and the outer sections (304) are aligned with each other, the left and right wheels on the axles are held at the relative same height to each other. That is to say, it is not possible to adjust the height of either the left or the right wheel independently if they are attached to the same axle, therefore ensuring a level height-of-cut. When the front and rear axles are connected via a linking arm (450), the front and rear wheels are also adjusted simultaneously. This effect is achieved without the need for creating a new chassis moulding.

Whilst the present invention is described by way of the example above, certain alternatives can be envisioned by the skilled person to be covered by the invention. The chassis may be equipped with any configuration of multi-channel apertures for fixed positions from a 2-step aperture (a 'C-gate ') upwards. The cranked-axles (300) may not be joined via a linking arm (450), but may instead be two separate cranked-axle height-of-cut systems controlling the front and rear wheel height-of-cut separately. In the event that the front and rear cranked axles (300) are not linked via a linking arm (450), then both front and rear cranked axles (300) are arranged to engage a handle attachment (700) as shown in Figure 11. It may also be envisioned that the channel (600, 702) to accommodate a cranked axle (300) may not be open-sided, e.g. no gap (601, 701) to allow the cranked axle (300) to be slotted in to the channel (600, 702), but may fully surround the cranked axle (300) within the channel (600, 702).

## Claims

1. A lawn-care apparatus (100) comprising a chassis (110) and an adaptor (500),
the adaptor (500) engagable with an aperture (200) in the chassis (110), the aperture (200) suitable for providing multiple fixed axle (120) positions (202) corresponding to multiple cutting heights,
the adaptor (500) providing a single fixed channel (600) adapted to receive a cranked axle (300) and within which said cranked axle (300) can be rotated to provide multiple cutting heights.

2. A lawn-care apparatus (100) according to Claim 1, wherein the lawn-care apparatus is a lawnmower.

3. A lawn-care apparatus (100) according to Claim 1 or Claim 2 wherein the aperture (200) is a multi-channel aperture, such as an 'E-gate' aperture.

4. A lawn-care apparatus (100) according to any preceding claim wherein the channel (600) provided to engage with the cranked axle (300) is an aperture extending through the width of the adaptor (500).

5. A lawn-care apparatus (100) according to any preceding claim, wherein the channel (600) which engages the cranked axle (300) is aligned away from the fixed multiple axle positions (202) of the aperture (200), thereby avoiding collision between an adjacent wheel and other components.

6. A lawn-care apparatus (100) according to any preceding claim wherein the adaptor (500) has a push-fit engagement with the apparatus.

7. A lawn-care apparatus (100) according to any preceding claim wherein the adaptor (500) comprises at least one protrusion extending away from the main body (502) of the adaptor to engage with the aperture (200).

8. A lawn-care apparatus (100) according to Claim 7, wherein the adaptor (500) comprises at least two protrusions (510, 520, 530), and at least one (530) extends further than the remaining protrusion (510, 520) to engage the aperture (200) sooner than the remaining protrusion (510, 520) when inserting the adaptor (500).

9. A lawn-care apparatus (100) according to either Claim 7 or 8, wherein at least one of the protrusions (510, 520, 530) comprises clip features (550) that retain the adaptor (500) with the apparatus (100) once fully engaged with the aperture (200).

10. A lawn-care apparatus (100) according to Claim 9 wherein the clip features (550) provide a one-way fit, and the adaptor (500) cannot be dis-engaged from the aperture (200) once fully engaged.

11. A lawn-care apparatus (100) according to any preceding claim wherein the channel (600) is not fully enclosed by the adaptor (500) therefore allowing a cranked axle (300) to be slotted into the channel (600).

12. A lawn-care apparatus (100) according to Claim 11 wherein the cranked axle (300) is retained in place by the edge of the 'E-gate' aperture and the channel (600) within the adaptor (500).

13. A lawn-care apparatus (100) according to any preceding claim wherein the adaptor (500) further comprises a ridge section (605) as a running rail for the cranked axle (300) and therefore assist rotation.

14. A lawn-care apparatus (100) according to any preceding claim,
the adaptor (710) further comprising detents (712) positioned around the channel (702), a separate lever device (720) designed to engage with a cranked axle (300) and enable rotation of the cranked axle (300), the lever device (720) mating with the detents (712) of the adaptor (710) thus retaining the rotational position of the cranked axle (300) as desired.

15. An adaptor (500, 710) engagable with an aperture (200) in a chassis (110) of a lawn-care apparatus the aperture suitable for providing multiple fixed axle (120) positions (202) corresponding to multiple cutting heights,
the adaptor (500) providing a single fixed channel (600, 702) adapted to receive a cranked axle (300), and within which said cranked axle (300) can be rotated to provide multiple cutting heights.

## Patentansprüche

1. Rasenpflegegerät (100), aufweisend ein Gehäuse (110) und einen Adapter (500),
wobei der Adapter (500) mit einer Öffnung (200) im Gehäuse (110) in Eingriff gebracht werden kann, wobei die Öffnung (200) geeignet ist, mehrere Positionen (202) für eine feste Welle (120), welche mehreren Schnitthöhen entsprechen, bereitzustellen,
wobei der Adapter (500) einen einzigen, festen Kanal (600) bereitstellt, welcher angepasst ist, eine gekröpfte Welle (300) aufzunehmen, und innerhalb dessen die gekröpfte Welle (300) gedreht werden kann, um mehrere Schnitthöhen bereitzustellen.

2. Rasenpflegegerät (100) nach Anspruch 1, wobei das Rasenpflegegerät ein Rasenmäher ist.

3. Rasenpflegegerät (100) nach Anspruch 1 oder Anspruch 2, wobei die Öffnung (200) eine mehrkanalige Öffnung ist, wie beispielsweise eine Öffnung in Form einer "E-Kulisse".

4. Rasenpflegegerät (100) nach einem der vorhergehenden Ansprüche, wobei der Kanal (600), welcher bereitgestellt ist, um mit der gekröpften Welle (300) in Eingriff zu gelangen, eine Öffnung ist, welche sich durch die Breite des Adapters (500) erstreckt.

5. Rasenpflegegerät (100) nach einem der vorhergehenden Ansprüche, wobei der Kanal (600), welcher mit der gekröpften Welle (300) in Eingriff gelangt, von den mehreren Positionen (202) für eine feste Welle der Öffnung (200) abgewandt angeordnet ist, wodurch ein Zusammenstoß zwischen einem benachbarten Rad und anderen Komponenten vermieden wird.

6. Rasenpflegegerät (100) nach einem der vorhergehenden Ansprüche, wobei der Adapter (500) einen Schiebesitz-Eingriff mit dem Gerät besitzt.

7. Rasenpflegegerät (100) nach einem der vorhergehenden Ansprüche, wobei der Adapter (500) mindestens einen Vorsprung aufweist, welcher sich vom Hauptkörper (502) des Adapters weg erstreckt, um mit der Öffnung (200) in Eingriff zu gelangen.

8. Rasenpflegegerät (100) nach Anspruch 7, wobei der Adapter (500) mindestens zwei Vorsprünge (510, 520, 530) aufweist, und mindestens einer (530) sich weiter als der verbleibende Vorsprung (510, 520) erstreckt, um früher mit der Öffnung (200) als der verbleibende Vorsprung (510, 520) in Eingriff zu gelangen, wenn der Adapter (500) eingesetzt wird.

9. Rasenpflegegerät (100) nach einem der Ansprüche 7 oder 8, wobei mindestens einer der Vorsprünge (510, 520, 530) Clip-Merkmale (550) aufweist, welche den Adapter (500) mit dem Gerät (100) festhalten, wenn er vollständig mit der Öffnung (200) in Eingriff gebracht ist.

10. Rasenpflegegerät (100) nach Anspruch 9, wobei die Clip-Merkmale (550) eine Passung in einer Richtung bereitstellen und der Adapter (500), nachdem er vollständig in Eingriff gebracht wurde, mit der Öffnung (200) nicht außer Eingriff gebracht werden kann.

11. Rasenpflegegerät (100) nach einem der vorhergehenden Ansprüche, wobei der Kanal (600) vom Adapter (500) nicht vollständig eingeschlossen ist, wodurch es einer gekröpften Welle (300) ermöglicht wird, in den Kanal (600) eingesteckt zu werden.

12. Rasenpflegegerät (100) nach Anspruch 11, wobei die gekröpfte Welle (300) durch den Rand der Öffnung in Form einer "E-Kulisse" und den Kanal (600) innerhalb des Adapters (500) in ihrer Position gehalten wird.

13. Rasenpflegegerät (100) nach einem der vorhergehenden Ansprüche, wobei der Adapter (500) weiter einen Rippenabschnitt (605) als Laufschiene für die gekröpfte Welle (300) aufweist und daher eine Drehung unterstützt.

14. Rasenpflegegerät (100) nach einem der vorhergehenden Ansprüche, wobei der Adapter (710) weiter Rastungen (712), welche um den Kanal (702) herum angeordnet sind, und eine separate Hebelvorrichtung (720) aufweist, welche dafür ausgelegt ist, mit einer gekröpften Welle (300) in Eingriff zu gelangen und eine Drehung der gekröpften Welle (300) zu ermöglichen, wobei die Hebelvorrichtung (720) mit den Rastungen (712) des Adapters (710) zusammenpasst, so dass die Schwenkposition der gekröpften Welle (300) wie gewünscht beibehalten wird.

15. Adapter (500, 710), welcher mit einer Öffnung (200) in einem Gehäuse (110) eines Rasenpflegegeräts in Eingriff gebracht werden kann, wobei die Öffnung geeignet ist, mehrere Positionen (202) für eine feste Achse (120), welche mehreren Schnitthöhen entsprechen, bereitzustellen,
wobei der Adapter (500) einen einzigen, festen Kanal (600, 702) bereitstellt, welcher angepasst ist, eine gekröpfte Welle (300) aufzunehmen, und innerhalb dessen die gekröpfte Welle (300) gedreht werden kann, um mehrere Schnitthöhen bereitzustellen.

## Revendications

1. Appareil de traitement de gazon (100) comprenant un châssis (110) et un adaptateur (500), l'adaptateur (500) pouvant être engagé avec une ouverture (200) dans le châssis (110), l'ouverture (200) étant apte à fournir de multiples positions fixes (202) d'essieu (120) correspondant à des hauteurs de coupe multiples,
l'adaptateur (500) fournissant un canal fixe unique (600) apte à recevoir un essieu-manivelle (300) et à l'intérieur duquel ledit essieu-manivelle (300) peut être tourné pour fournir des hauteurs de coupe multiples.

2. Appareil de traitement de gazon (100) selon la revendication 1, dans lequel l'appareil de traitement de gazon est une tondeuse à gazon.

3. Appareil de traitement de gazon (100) selon la revendication 1 ou la revendication 2, dans lequel l'ouverture (200) est une ouverture à plusieurs canaux, par exemple une ouverture de type en E.

4. Appareil de traitement de gazon (100) selon l'une quelconque des revendications précédentes, dans lequel le canal (600) prévu pour s'engager avec l'essieu-manivelle (300) est une ouverture s'étendant à travers la largeur de l'adaptateur (500).

5. Appareil de traitement de gazon (100) selon l'une quelconque des revendications précédentes, dans lequel le canal (600) qui s'engage avec l'essieu-manivelle (300) est aligné à l'écart des multiples positions fixes (202) d'essieu de l'ouverture (200), pour ainsi éviter une collision entre une roue adjacente et d'autres composants.

6. Appareil de traitement de gazon (100) selon l'une quelconque des revendications précédentes, dans lequel l'adaptateur (500) est engagé par assemblage par poussée avec l'appareil.

7. Appareil de traitement de gazon (100) selon l'une quelconque des revendications précédentes, dans lequel l'adaptateur (500) comprend au moins une saillie s'étendant à l'écart du corps principal (502) de l'adaptateur de manière à s'engager avec l'ouverture (200).

8. Appareil de traitement de gazon (100) selon la revendication 7, dans lequel l'adaptateur (500) comprend au moins deux saillies (510, 520, 530), et au moins l'une (530) s'étend plus loin que la saillie restante (510, 520) de manière à s'engager avec l'ouverture (200) plus tôt que la saillie restante (510, 520) lors de l'insertion de l'adaptateur (500).

9. Appareil de traitement de gazon (100) selon l'une ou l'autre des revendications 7 et 8, dans lequel au moins l'une des saillies (510, 520, 530) comprend des éléments de pince (550) qui retiennent l'adaptateur (500) avec l'appareil (100) une fois qu'il est entièrement engagé avec l'ouverture (200).

10. Appareil de traitement de gazon (100) selon la revendication 9, dans lequel les éléments de pince (550) fournissent un ajustement unidirectionnel, et l'adaptateur (500) ne peut pas être désengagé de l'ouverture (200) une fois qu'il est complètement engagé.

11. Appareil de traitement de gazon (100) selon l'une quelconque des revendications précédentes, dans lequel le canal (600) n'est pas entièrement enfermé dans l'adaptateur (500), en permettant ainsi d'emboîter un essieu-manivelle (300) dans le canal (600).

12. Appareil de traitement de gazon (100) selon la revendication 11, dans lequel l'essieu-manivelle (300) est retenu en position par le bord de l'ouverture en E et par le canal (600) à l'intérieur de l'adaptateur (500).

13. Appareil de traitement de gazon (100) selon l'une quelconque des revendications précédentes, dans lequel l'adaptateur (500) comprend en outre une section de crête (605) en tant que rail de roulement pour l'essieu-manivelle (300) et par conséquent pour faciliter la rotation.

14. Appareil de traitement de gazon (100) selon l'une quelconque des revendications précédentes, l'adaptateur (710) comprenant en outre des ergots (712) positionnés autour du canal (702), un dispositif de levier séparé (720) conçu pour s'engager avec un essieu-manivelle (300) et permettre la rotation de l'essieu-manivelle (300), le dispositif de levier (720) s'accouplant avec les ergots (712) de l'adaptateur (710) pour ainsi retenir la position de rotation de l'essieu-manivelle (300) comme souhaité.

15. Adaptateur (500, 710) pouvant s'engager avec une ouverture (200) dans un châssis (110) dans un appareil de traitement de gazon, l'ouverture étant apte à fournir de multiples positions fixes (202) d'essieu (120) correspondant à de multiples hauteurs de coupe,
l'adaptateur (500) fournissant un canal fixe unique (600, 702) apte à recevoir un essieu-manivelle (300), et à l'intérieur duquel ledit essieu-manivelle (300) peut être tourné pour fournir de multiples hauteurs de coupe.
